# EUROPÄISCHE PATENTSCHRIFT

(11) **EP 2 272 142 B1**
(45) Veröffentlichungstag und Bekanntmachung des Hinweises auf die Patenterteilung: **07.05.2014**
(21) Anmeldenummer: 09717220.9
(22) Anmeldetag: 03.03.2009
(51) Int. Cl.: H02B 1/30

(54) **Schaltschrank mit einer Bodenplatte**
Electrical cabinet with a bottom plate
Armoire électrique avec panneau de fond

(30) Priorität: 04.03.2008 DE 102008012460
(43) Veröffentlichungstag der Anmeldung: 12.01.2011
(73) Patentinhaber: Berthold Sichert GmbH, 12277 Berlin (DE)
(72) Erfinder: PERSCHON, Helmut, 12305 Berlin (DE); IRMER, Günter, 13055 Berlin (DE)
(74) Vertreter: Alber, Norbert
(86) Internationale Anmeldenummer: PCT/EP2009/052492
(87) Internationale Veröffentlichungsnummer: WO 2009/109568

(56) Entgegenhaltungen:
- EP-A- 1 376 795
- DE-A1- 2 720 936
- DE-A1-102006 033 302
- DE-U1- 7 816 729
- FR-A1- 2 535 914
- US-A- 5 202 538
- US-A1- 2002 079 112

## Beschreibung

### I. Anwendungsgebiet

Die Erfindung betrifft einen Schaltschrank mit einer Bodenplatte, wie sie insbesondere bei Kabelverteilerschränken zwischen dem Verteilerraum und dem Sockelraum als Trennung angeordnet ist, aber auch bei anderen elektrischen Schaltschränken Verwendung finden kann.

### II. Technischer Hintergrund

Kabelverteilerschränke dienen beispielsweise in der Kommunikationstechnik dazu, eine Vielzahl von Hausanschlüssen mit den Erdkabeln zu verbinden.

Ein derartiger Schaltschrank ist beispielweise aus der US 5202538 bekannt.

Zu diesem Zweck steht das Gehäuse des Schaltschrankes, in dem sich der Verteilerraum mit den Klemmschienen oder weiteren aktiven elektrischen Komponenten befindet, auf einem hohlen Sockel, der sich zumindest teilweise in den Erdboden hinein erstreckt, und durch den die Erdkabel herangeführt werden.

Aus Gründen des Berührungsschutzes, der Kondenswasserbildung usw. ist als Trennung zwischen dem Verteilerraum und dem Sockelraum, also zwischen dem eigentlichen Schrankgehäuse und dem Sockel, eine Bodenplatte angeordnet, durch den hindurch sich die Erdkabel nach oben in den Verteilerraum hineinerstrecken.

Dabei gibt es eine Reihe von Problemfällen zu berücksichtigen:
Zum einen ist - in der Aufsicht betrachtet - im Gehäuse meist ein Montagegestell montiert, welches die Stabilität des Gehäuses sichert, und an dem die einzelnen Komponenten, insbesondere die Blöcke mit den Klemmleisten, verschraubt sind.

In der Aufsicht betrachtet befinden sich diese ,Blöcke mit Klemmleisten im vorderen Bereich, etwa in der vorderen Hälfte, des Grundrisses des Gehäuses. Die Erdkabel sollten deshalb die Bodenplatte vorzugsweise in dem hinteren Bereich durchlaufen, um von dort hinter den Klemmleisten auf die notwendige Höhe hochgeführt zu werden.

Theoretisch könnten die Erdkabel auch die Bodenplatte im vorderen Bereich durchdringen, müssten dann aber noch unterhalb der untersten Klemmleiste nach hinten umgebogen werden. Angesichts der Dicke der Erdkabel von meist mehr als 4 cm und der entsprechenden Steifigkeit ist dies prinzipiell schwierig, erst recht jedoch angesichts der beengten Einbauverhältnisse umso schwieriger, je weiter unten am Montagegestell die Klemmleisten beginnen, denn umso weniger hoch ist der für eine Umlenkung nach hinten verbleibende Raum zwischen dem Kabeldurchgang in der Bodenplatte und der untersten Klemmschiene.

Ein anderes Problem ist die Beschädigung von Schaltschränken durch dagegengefahrene Kraftfahrzeuge:
Dabei wird häufig die äußere Schutzbeplankung des Schaltschrankes beschädigt, die relativ leicht ausgetauscht werden kann.

Wenn jedoch auch der Rahmen und/oder die Bodenplatte gebrochen ist und ausgetauscht werden muss, ist der Aufwand hierfür sehr groß, da die einzelnen Erdkabel durch Kabeldurchlässe diese Bodenplatte durchdringen und somit vor dem Austausch alle Erdkabel abgeklemmt und der Schaltschrank vom Sockel abgehoben werden muss, bevor eine neue Bodenplatte auf dem Sockel montiert werden kann.

Auch eine lange Abschaltzeit aller an diesem Schaltschrank hängenden Hausanschlüsse ist die Folge.

Weiterhin kommt erschwerend hinzu, dass das Gehäuse meist aus einem aus Profilen entlang der Kanten zusammengesetzten inneren Rahmen besteht, auf den die äußere Beplankung des Gehäuses aufgebracht ist und dieser innere Rahmen häufig über die Grenze zwischen Verteilerraum und Sockelbereich hinweg nach unten reicht und an der Grenz lediglich horizontale Querstreben, an welcher die Bodenplatte befestigt werden kann, hat.

### III. Darstellung der Erfindung

### a) Technische Aufgabe

Es ist daher die Aufgabe gemäß der Erfindung, einen Schaltschrank mit einer Bodenplatte zu schaffen, die trotz einfacher und kostengünstiger Herstellung bei guter Ausnutzung des Verteilerraumes eine Hindurchführung von vielen Kabel gestattet und dennoch einfach und schnell auch im Beschädigungs- und Erweiterungsfall montiert werden kann.

### b) Lösung der Aufgabe

Diese Aufgabe wird durch die Merkmale der Ansprüche 1 und 17 gelöst. Vorteilhafte Ausführungsformen ergeben sich aus den Unteransprüchen.

Durch die klappbare Befestigung des wenigstens einen Plattenteils der Bodenplatte an ihrer Außenkante gegenüber dem Rahmen, muss diese Hälfte nicht komplett entfernt werden, sondern kann durch Wegklappen außer Eingriff mit den nach oben führenden Kabeln gebracht werden.

Zusätzlich kann dieses Plattenteil auch komplett entfernt werden. Zu diesem Zweck ist entweder das die Klappung ermöglichende Scharnier ein trennbares Scharnier, oder die Befestigung dieses Plattenteils an dem Rahmen kann gelöst werden.

Das gegenüber dem klappbaren Plattenteil andere Plattenteil wird vorzugsweise nur entfernt und ist nicht klappbar ausgestattet, kann jedoch alternativ ebenfalls zusätzlich klappbar sein.

Wichtig ist dabei, dass der Klappmechanismus so ausgeführt ist, dass sich das klappbare Plattenteil nach unten in den Sockelbereich wegklappen lässt.

Auch bei dem demontierbaren anderen Plattenteil ist die Befestigung zusammen mit der Dimensionierung des Plattenteiles so zu wählen, dass beim Demontieren ein Entfernen dieses Plattenteiles nur nach unten, in den Sockelbereich hinein, stattfindet.

Somit ist während des Montage- und Demontagevorganges kein Eindringen dieser Plattenteile in den Verteilerraum, also den Raum oberhalb der Bodenplatte, notwendig und die dort vorhandenen Einbauten müssen weder deaktiviert noch abgeklemmt werden.

Die Befestigung der Plattenteile am Rahmen erfolgt mittels möglichst einfacher und schnell zu bedienender Verriegelungselemente, insbesondere Schnellverschlüssen, wie etwa Hebelschnellverschlüssen, die nur eine Vierteldrehung für das Verriegeln benötigen.

Im mittleren Bereich der Bodenplatte ist eine Öffnung vorgesehen, die sich über die Trennlinie zwischen den beiden Plattenteilen hinweg erstreckt, durch die hindurch die Kabel nach oben verlaufen.

Dabei wird die Feuchtigkeitsabdichtung gegen ein Eindringen der Feuchtigkeit nach oben in den Verteilerraum dadurch vermieden, dass nicht wie üblich Kabeltüllen aus Gummimaterial in Form von dünnem Flachmaterial von 1 mm bis 3 mm Dicke verwendet wird, sondern die Öffnung um die Kabel herum verschlossen wird mit Hilfe von Dichtungsblöcken aus einem elastischen Material, insbesondere Schaumstoff, die eine Dichtungslänge, d.h. in der vertikalen Kabelverlaufsrichtung an dieser Stelle gemessen, von mindestens 30mm, besser mindestens 50mm, besser mindestens 70mm besitzen.

Diese Dichtungsblöcke bestehen vorzugsweise aus einem geschlossenzelligen Schaumstoff, also einem geschäumten Kunststoff, um das Eindringen von Wasser in die einzelnen Poren und das Vorwärtsdringen auf diesem Weg zu verhindern.

Die Kabeldurchlässe sind in den Dichtungsblöcken vorgeschnitten, jedoch die dabei herausfallenden Teile, die den Kabeldurchlass bieten, nicht vollständig entfernt, sondern die notwendigen Ringschnitte weisen noch Unterbrechungen als Verbindungsstellen auf. Auf diese Art und Weise können vor allem mehrere konzentrische fast fertig gestellte Ringschnitte für unterschiedliche Kabeldurchmesser angefertigt werden. Bei der Montage wird dann der benötigte Ringschnitt fertig gestellt und das entsprechende Kernelement entfernt.

Die Ringschnitte verlaufen dabei nicht vertikal, also im rechten Winkel zur Oberseite und Unterseite des Dichtungsblockes, sondern demgegenüber leicht geneigt und bilden einen Kegelstumpf, der am oberen Ende seinen engsten Durchmesser aufweist.

Da das Material elastisch ist, wird auch bei einer Wahl eines zu engen Halsdurchmessers am oberen Ende des Kegelstumpfes dort das Material durch Verpressen nach außen soweit aufgeweitet werden, dass es das Kabel durchlässt und durch diese Vorspannung besonders gut abdichtet.

Die von unten sich annähernde Feuchtigkeit wird mit zunehmendem Aufsteigen nach oben durch diese zunehmende Vorspannung immer mehr Widerstand zu überwinden haben und daher letztendlich nicht in den Verteilerraum eindringen können. Der Kegelwinkel wird dabei zwischen 1° und 10°, vorzugsweise zwischen 2° und 7° betragen.

Die Ringschnitte weisen zusätzlich einen von der frei zugänglichen Kante des Dichtungsblockes aus bis zum Ringschnitt reichenden Zugangsschnitt auf, entlang dessen der Dichtungsblock auseinandergeklappt werden kann, um ihn von der Seite auf das bereits montierte Kabel aufschieben zu können.

Um die Montage weiter zu erleichtern, sind die Dichtungsblöcke in Längsrichtung getrennt und die Kabeldurchlässe sind entweder vollständig in einer der beiden Blockteilen aufgenommen - mit einem Zugangsschnitt zur Kontaktfläche zum anderen Blockteil hin - oder sie liegen mittig auf der Trennlinie, so dass kein Zugangsschnitt notwendig ist.

Jeweils eine der beiden zusammengehörigen Hälften eines Dichtungsblockes liegt dann mit seiner der Kontaktfläche abgewandten Rückseite an einer Längskante der Öffnung in der Bodenplatte an, also an einem der beiden Plattenteile.

Um im montierten Zustand die Blockteile sicher gegeneinanderzupressen und auch ein seitliches Verschieben zu vermeiden, ist die Trennlinie zwischen den Blockteilen keine gerade Trennlinie, sondern weist Fortsätze in die eine und/oder andere Querrichtung auf und das andere Blockteil eine entsprechende Ausnehmung. Vorzugsweise ist die Trennlinie in der Aufsicht betrachtet zickzackförmig ausgestaltet, vorzugsweise sind die beiden Blockteile identisch gestaltet.

Damit im montierten Zustand die beiden Dichtungsblöcke zwischen den beiden Hälften der Bodenplatte um die Kabel herum sicher verbleiben, werden sie auf Führungsstäbe aufgesteckt:

Diese Führungsstäbe verlaufen von der Längskante der Öffnung an dem einen Plattenteil, insbesondere dem klappbaren Plattenteil, weg in Querrichtung in die Öffnung hinein und zwar in der Plattenebene oder geringfügig versetzt parallel zur Plattenebene, und über die Trennlinie hinweg und auch über die gegenüberliegende Längskante der Öffnung, hinweg unter das andere Plattenteil.

Diese Führungsstäbe sind in regelmäßigen Abständen über die Längserstreckung verteilt angeordnet und in den Dichtungsblöcken sind im gleichen Abstand entsprechende, in Querrichtung verlaufende Durchgangsöffnungen zum Aufstecken als Führungsöffnung.

Vorzugsweise ist in jedem Dichtungsblock seitlich nahe dem Ende jeweils eine Führungsöffnung vorgesehen. Die Länge der Öffnung in der Bodenplatte wird von einer bestimmten Anzahl von Dichtungsblöcken genau ausgefüllt, wobei die Summe der Dichtungsblöcke gegenüber der Öffnung in der Bodenplatte sowohl in Längsrichtung als auch in Querrichtung Übermaß haben soll, um die gewünschte Vorspannung im montierten Zustand zu erzielen. Die Anzahl der Führungsstäbe ist somit vorzugsweise die zweifache Anzahl der Dichtungsblöcke.

Um in Querrichtung eine sichere Anlage der Dichtungsblöcke zur Verfügung zu haben, ist an den Plattenteilen die Längskante der Öffnung jeweils als vertikal verlaufende Anschlagfläche ausgebildet, deren Höhe wenigstens der Höhe der Dichtungsblöcke entspricht und vorzugsweise am unteren Ende eine in die Öffnung hineinragende Kröpfung zum Auflegen der Enden der Dichtungsblöcke aufweist.

Die Führungsstäbe sind auf etwa halber Höhe dieser Anschlagfläche montiert.

Um die Dichtungsblöcke in Querrichtung ausreichend unter Vorspannung zu setzen, wird dies vorzugsweise nicht nur durch Einsetzen des zweiten Plattenteiles alleine bewirkt, sondern durch eine in Querrichtung vorspannbare Pressleiste, die gegen die dem zweiten Plattenteil zugewandte Längskante der Dichtungsblöcke drückt und sich über die gesamte Länge der Öffnung erstreckt.

Diese Pressleiste ist mittels Langlöchern an dem nicht klappbaren Plattenteil, insbesondere dem vorderen Plattenteil, verschiebbar befestigt und wird von den freien Enden der Führungsstäbe durchdrungen, auf denen ein Außengewinde aufgebracht ist.

Dadurch kann die Pressleiste mittels auf diese freien Enden - hinter der Pressleiste - aufgebrachte Gewindeverschlüsse gegen die Dichtungsblöcke vorgespannt werden.

Mit einer solchen Bodenplatte lassen sich auch Problemfälle wie Reparaturen und Erweiterungen von Kabelverteilerschränken gut realisieren:
Im Reparaturfall muss häufig außer dem äußeren Gehäuse, also der Beplankung, auch der tragende Rahmen wegen Beschädigung entfernt werden.

Da eine bereits vorhandene Bodenplatte - auch wenn sie selbst nicht beschädigt ist und nicht selbst ausgetauscht werden muss - an den Querstreben des Rahmens befestigt ist, muss zunächst diese Bodenplatte vor dem Austausch des Rahmens entfernt werden. Anschließend wird der Rahmen vom Sockel und den Einbauten bzw. dem diese Einbauten tragenden Traggestell gelöst und nach oben abgehoben und ein neuer Rahmen aufgesetzt.

Danach wird die unbeschädigte alte oder eine ausgetauschte neue Bodenplatte in der erfindungsgemäßen zweiteiligen klappbaren Bauform relativ einfach montiert, indem im noch nicht verkleideten Sockelbereich unterhalb der Montageebene der Bodenplatte das hintere, klappbare Plattenteil zunächst am Rahmen befestigt wird.

Anschließend werden die ersten, also die hintere Reihe, von Blockteilen auf die Führungsstäbe des heruntergeklappten Plattenteiles über die gesamte Länge der Öffnung in diesem Plattenteil auf die Führungsstäbe aufgeschoben und zuvor entsprechend dem Durchmesser und der Position der sich durch den Sockelbereich nach oben erstreckenden Kabel die entsprechenden Kabeldurchlässe in diesen Dichtungsblöcken bereits geöffnet.

Danach wird dieses Plattenteil in die aktivierte horizontale Lage hochgeklappt und dabei die Kabel durch den Zugangsschnitt in ihren jeweiligen Kabeldurchlass des entsprechenden Blockteiles eingeführt und das hintere Plattenteil in dieser hochgeklappten Lage fixiert.

Nunmehr werden die zweiten, vorderen Hälften der Blockteile auf die Führungsstäbe des hinteren Plattenteiles aufgeschoben, nachdem wiederum darin an den entsprechenden Stellen und mit dem passenden Durchmesser die Kabeldurchlässe für die weiter vorne liegenden Kabel geöffnet wurden, die dabei durch die Zugangsschnitte in ihre Kabeldurchlässe gelangen.

Anschließend wird das zweite Plattenteil von unten durch den Sockelbereich von vorne gegen die Blockteile herangeführt, bis auf die Montageebene der Bodenplatte angehoben, und gegenüber dem Rahmen fixiert.

Um die Dichtblöcke gegen den Außenumfang der Kabel dicht anzupressen, wird eine sich über die gesamte Länge der Öffnung erstreckende Pressleiste - die einen vertikalen Schenkel aufweist der sich von dem vorderen Plattenteil aus nach unten erstreckt - gegen die Stirnfläche der zweiten Reihe von Blöcken gepresst mit Hilfe der auf die hindurchgeführten und mit einem Außengewinde ausgestatteten freien Ende der Führungsstäbe, auf die Drehverschlüsse aufgebracht werden.

Meist noch aufwendiger als eine Reparatur ist die Erweiterung eines vorhandenen Kabelverteilerschrankes, wenn weitere Einbauten im bisherigen Schrank keinen Platz mehr finden.

Abhängig vom Alter des Kabelverteilerschrankes handelt es sich dabei um ein Modell mit einem das Gehäuse tragenden Rahmen, oder auch ohne einen solchen Rahmen, in dem lediglich ein Traggestell zum Tragen der Einbauten vorhanden ist.

Ebenso kann beim bisherigen Schrank eine Bodenplatte vorhanden sein oder auch nicht.

In jedem Fall muss - wie zuvor bei der Reparatur beschrieben - zunächst das Gehäuse, also die äußere Beplankung und gegebenenfalls der innere Rahmen, entfernt werden.

Da für die Erweiterung, also in der Regel Verbreiterung, des Gehäuses auch ein breiterer Sockel benötigt wird, muss auch der Sockel ausgetauscht werden.

Damit die Einbauten nicht abgebaut und abgeklemmt werden müssen, müssen sie für die Entfernung des Sockels an einer Hilfsvorrichtung aufgehängt werden. Dann wird der tragende Sockel entfernt und ein neuer, breiterer Sockel untergebaut, auf dem das Tragegestellt nun aufsitzen kann.

Anschließend wird der neue, breitere Rahmen von oben übergestülpt und auf dem Sockel befestigt. Das die Einbauten tragende Gestell wird dann am neuen Rahmen befestigt.

Nunmehr kann die Montage der Bodenplatte erfolgen und - falls am alten Gestell noch eine Bodenplatte vorhanden war, die zum Abnehmen des alten Gehäuses nicht entfernt werden musste - wird die neue Platte unterhalb des Niveaus der alten Bodenplatte montiert, wodurch die neue Bodenplatte auch lediglich die von unten nach oben laufenden Kabel umschließen muss und keine weiteren, vom alten Schrank stammenden, vertikalen Streben.

Aufgrund der Konstruktion und des Montageablaufes der Bodenplatte - wie zuvor beschrieben - ist dies auch bei dem verbreiterten Schrank durch den bis auf die Kabel freien, zugänglichen Sockelbereich aus gut und schnell möglich.

### c) Ausführungsbeispiele

Ausführungsformen gemäß der Erfindung sind im Folgenden beispielhaft näher beschrieben. Es zeigen:
- Fig. 1:: einen Kabelverteilerschrank (KVS),
- Fig. 2:: die fertig zusammengesetzte Bodenplatte,
- Fig. 3.: die Bodenplatte beim Zusammenbau,
- Fig. 4:: Dichtblöcke in Detailansichten und
- Fig. 5:: die Schnittführung in den Dichtblöcken.

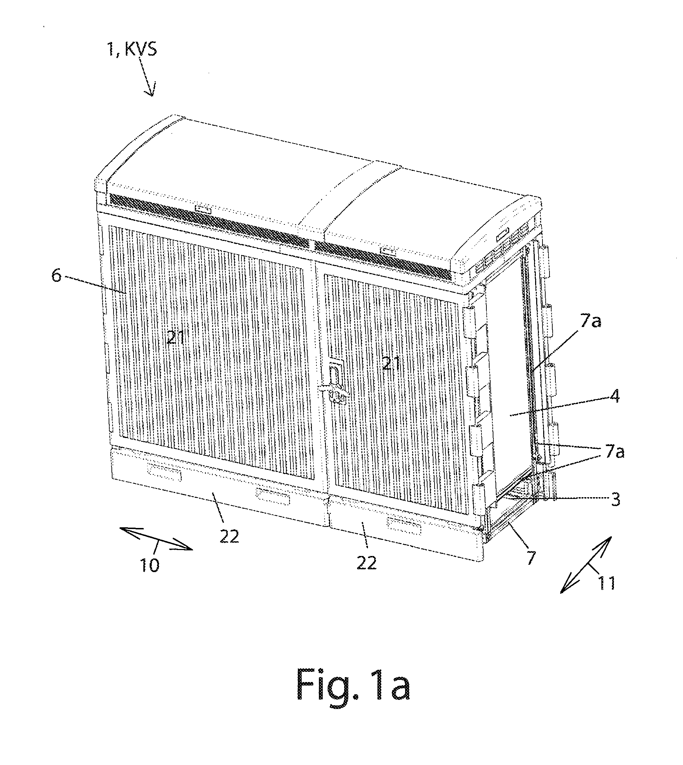

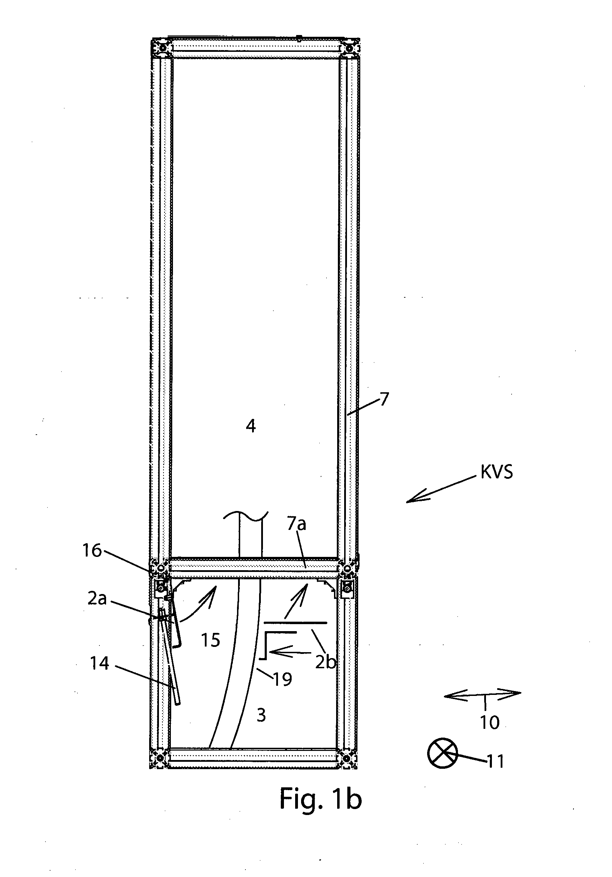

Figur 1 zeigt einen Schaltschrank 1 in der speziellen Bauform eines Kabelverteilerschrankes KVS, wie er im öffentlichen Raum zur Unterbringung von Hausanschlüssen für Telekommunikationsleitungen und Ähnlichem in großer Zahl verwendet wird.

Bei dem Kabelverteilerschrank KVS ist an einer der Stirnseiten die äußere schützende Beplankung entfernt bzw. das dort angesetzte weitere Schrankmodul, während der gesamte Rest wie üblich mit flächigen Elementen aus Kunststoff, also Dachelementen, Türen, Sockelverkleidungen etc., verblendet und geschützt ist, die an einem aus Profilen entlang der Längskanten bestehenden inneren Rahmen 7 befestigt sind.

An der offenen Stirnseite ist zu erkennen, dass dieser Rahmen 7 auf Höhe der Trennung zwischen dem oberen Verteilerraum 4 und dem unteren Sockelbereich 3 des Innenraumes des Schrankes eine Querstrebe 7a besitzt. Auch in Längsrichtung 10 - der in der Aufsicht betrachtet größere Erstreckung des Kabelverteilerschrankes KVS - weist der Rahmen 7 eine solche horizontale Strebe auf.

Während der Verteilerraum 4 durch Öffnen der Türen des Schrankes zugänglich wird, ist der Sockelbereich 3 durch Abnehmen der Sockelverblendung 22 zugänglich.

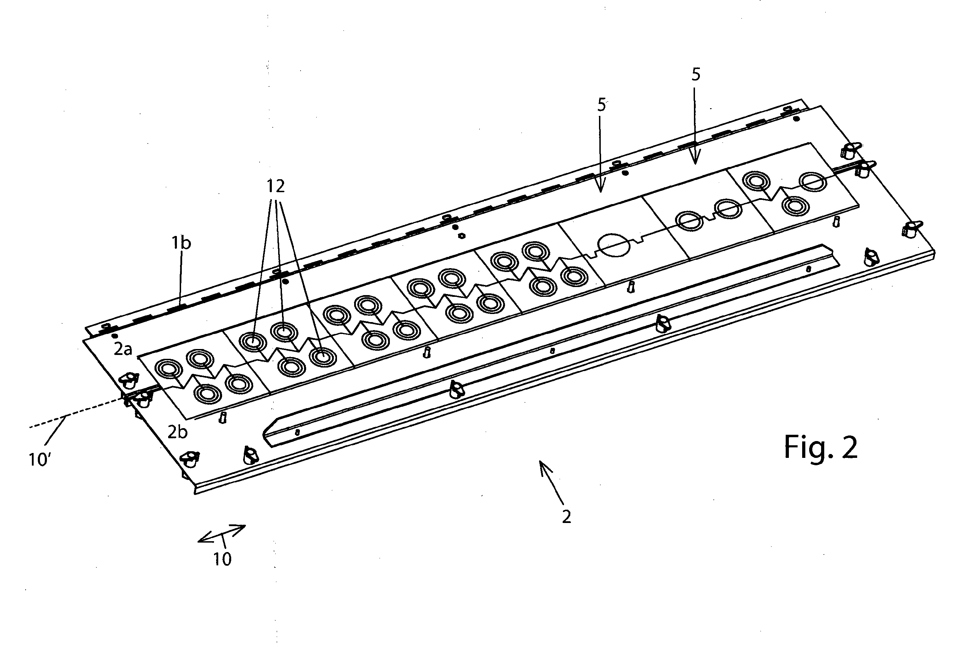

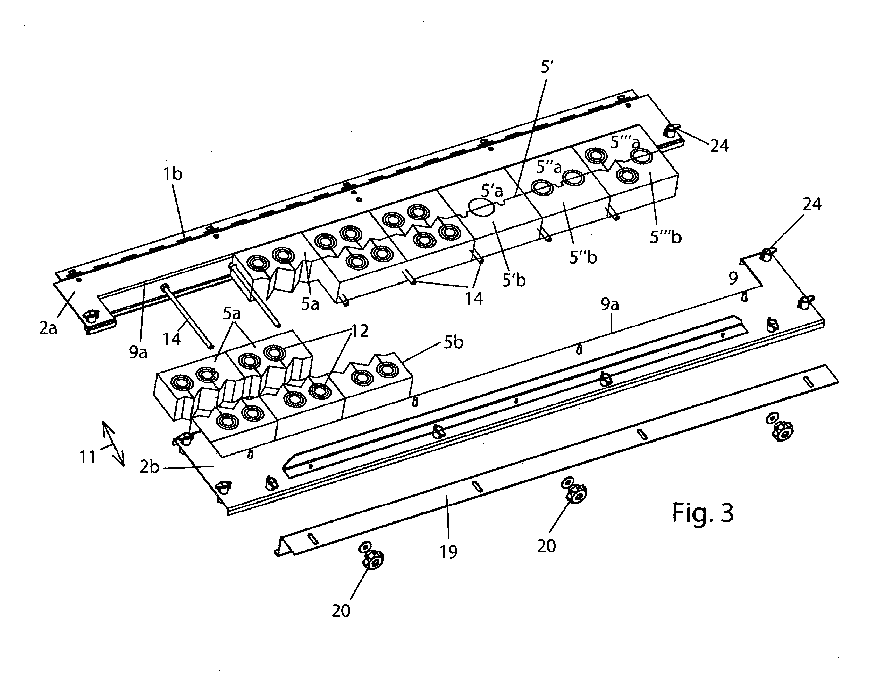

Auf der Trennebene zwischen dem Verteilerraum 4 und dem Sockelbereich 3 dient eine dort montierte Bodenplatte 2 als Trennung, die an den auf dieser Höhe montierten horizontalen Streben 7a des Rahmens 7 befestigt wird und in den Figuren 2 und 3 dargestellt ist.

Figur 1b zeigt den Rahmen 7 des Kabelverteilerschrankes KVS am Beginn der Montage dieser Bodenplatte 2 bei Betrachtung in Längsrichtung 10.

Wie ersichtlich, besteht das Problem darin, dass die aus dem Erdboden herangeführten, in der Regel mehreren, Kabel 15 von unten her zunächst den Sockelbereich 3 durchlaufen und in der Folge auch die Trennebene zum Verteilerraum 4, mithin die Bodenplatte 2. Diese soll gerade die Abdichtung gegen von unten vordringende Nässe zwischen Sockelbereich 3 und Verteilerraum 4 schaffen und zu diesem Zweck den gesamten restlichen horizontalen Freiraum auf dieser Trennebene um die Kabel herum bis zum äußeren Rahmen 7 hin abdichten.

Zu diesem Zweck sollen die Kabel 15 nicht entfernt werden und es muss berücksichtigt werden, dass die Kabel 15 zwar relativ steif sind, aber in ihrer Lage nicht völlig fixiert sind, also zwischen der Verklemmung an ihrem oberen freien Ende im Verteilerraum 4 und ihrem Austrittspunkt aus dem Erdreich am unteren Ende des Sockelbereiches noch begrenzt flexibel sind, was das Abdichten um diese Kabel 15 herum, gerade über lange Zeiträume, sehr erschwert, denn auch allein durch witterungsbedingte und somit temperaturbedingte Materialdehnungen verlagern diese Kabel ihre Lage beispielsweise wechselnd zwischen Sommer- und Wintersaison oder Tag und Nacht durchaus um messbare Distanzen.

Eine solche Bodenplatte 2 ist im fertig montierten Zustand in Figur 2 dargestellt, jedoch lässt sich der Aufbau besser anhand des Montagezustandes der Figur 3 erläutern:
Die Bodenplatte 2 ist in Längsrichtung 10 - der größeren Erstreckungsrichtung der Aufsicht auf den Kabelverteilerschrank KVS - etwa in der Mitte geteilt. Die den gesamten mittleren Bereich einnehmende rechteckige Öffnung 9 in der Bodenplatte 2, durch die hindurch die Kabel 15 verlaufen sollen, wird von der Bodenplatte 2 allseitig umschlossen, wenn deren beiden Plattenteile 2a, b auf der Trennlinie 10' gegeneinander gelegt sind, wie in Figur 2 dargestellt.

Die Öffnung 9 ist im montierten Zustand vollständig von Kabeldichtungsblöcken 5 ausgefüllt, in denen Kabeldurchlässe 12 geöffnet werden können durch die hindurch bei Bedarf jeweils ein Kabel 15 geführt wird, sodass am Außenumfang des nicht dargestellten Kabels 15 der Innenumfang des Kabeldurchlasses 12 eines Dichtungsblockes 5 dicht anliegt.

Die Bodenplatte 2 ist in der Regel ein Blechteil. Damit der Monteur, der von der Frontseite - wie in Figur 1 a ersichtlich - nach Öffnen der Türen am Schrank arbeitet, die Bodenplatte 2 z. B. demontieren und anschließend neu montieren kann, beispielsweise weil das komplette Gehäuse 6 wegen Beschädigung gewechselt werden muss, steht ihm hierfür zum Arbeiten mit der Bodenplatte 2 primär lediglich der Sockelbereich 3 zur Verfügung, der bis auf die hindurchgeführten Kabel 15 im Wesentlichen leer ist.

Der darüber befindliche Verteilerraum 4 dagegen ist - im Gegensatz zu der Darstellung der Figur 1b - in der Praxis angefüllt mit einem Montagegestell, an dem eine Vielzahl von elektrischen Einrichtungen verbaut ist, die diesen Raum weitestgehend ausfüllen.

Aus diesem Grund ist der vom Monteur abgewandte hintere Plattenteil 2a der Bodenplatte 2 mittels eines Scharniers 16, welches entlang der hinteren Längskante verläuft, klappbar ausgebildet und kann von der horizontalen Montagelage nach unten in den Sockelbereich 3 hineingeklappt werden. Zusätzlich kann das Plattenteil 2a auch ganz vom Rahmen 7 entfernt werden, entweder indem das Scharnier 16 ein trennbares Scharnier ist oder indem sich das Scharnier 16 innerhalb des Plattenteiles 2a befindet und das Plattenteil 2a am Rahmen 7 verschraubt ist, insbesondere das dem Rahmen 7 zugeordnete Teil des Scharniers 16.

Das dem Monteur zugewandte vordere Plattenteil 2b ist vorzugsweise nicht klappbar am Rahmen 7 befestigt, sondern kann stattdessen - wie in Figur 1b dargestellt - von unten, also vom Sockelbereich 3 her, in die Montagelage angehoben und dort mit den horizontalen Streben 7a des Rahmens 7 verbunden werden.

Das Fixieren am Rahmen 7 erfolgt bei beiden Plattenteilen 2a, b mittels der in den Figuren 2 und 3 dargestellten Knebelverschlüsse 24, bei denen eine radial vorstehende Nase durch Drehung des Zapfens, von dem sie vorstehen, in eine entsprechende Nut in der Innenseite der Profile, die den Rahmen 7 bilden, formschlüssig eingreifen.

Die Plattenteile 2a, b sind gegeneinander sowie auch gegenüber dem Rahmen vorzugsweise mittels einer dazwischen gelegten Dichtung abgedichtet.

Zum Montieren wird zunächst das hintere Plattenteil 2a in seine horizontale Lage hochgeklappt und dort fixiert und anschließend das vordere Plattenteil 2b vom Sockelbereich 3 aus in die Montagelage angehoben und ebenfalls am Rahmen 7, also dessen horizontalen Streben 7a, fixiert. Vorher jedoch müssen die Dichtungsblöcke 5 mindestens teilweise montiert sein:
Damit die Dichtungsblöcke 5 nicht entlang der Kabelverlaufsrichtung verrutschen, sind sie gegenüber den Plattenteilen 2a, b formschlüssig in ihrer Lage fixiert, indem sie auf Führungsstäbe 14 aufgeschoben sind, die von der Längskante 9a der Öffnung 9 im hinteren, klappbaren Plattenteil 2a aus in der Plattenebene vorwärtsragen, also in Querrichtung 11 verlaufend in die Öffnung 9 hinein, und nicht nur über die Trennlinie 10' zwischen den Plattenteilen 2a, b hinweg, sondern auch über die gegenüberliegende Längskante 9a des vorderen Plattenteiles 2b hinweg.

In der Darstellung der Figur 3 sind die Führungsstäbe 14, die in gleichmäßigen Abständen entlang der Längskante 9a angeordnet sind, immer auf der seitlichen Kontaktlinie zwischen zwei Dichtungsblöcken 5 dargestellt, vorzugsweise werden sie jedoch innerhalb der Dichtungsblöcke 5 verlaufen, beispielsweise jeweils vom äußeren seitlichen Rand eines Dichtungsblockes geringfügig zurückversetzt ins Innere, denn die Führungsstäbe dürfen die Kabeldurchlässe 12, die in den Dichtungsblöcken 5 vorgesehen sind, nicht kreuzen.

Die aus einem geschäumten Kunststoff, insbesondere einem geschlossenzelligen geschäumten Kunststoff, bestehenden Dichtungsblöcke sind darüber hinaus in Längsrichtung 10 in jeweils zwei Blockteile 5a, b geteilt, ansonsten können sie in ihrer Aufteilung unterschiedlich gestaltet sein:
Zunächst einmal kann die Trennlinie 5' zwischen den Blockteilen 5a, b gerade oder ungerade verlaufen, vorzugsweise weist jedoch eines der Blockteile z. B. 5a' Vorsprünge auf, die in entsprechende Ausnehmungen des anderen Blockteiles eingreifen, so dass diese Ausbuchtungen eine gerade Trennlinie 5' unterbrechen.

Bevorzugt wird jedoch eine zickzackförmige Trennlinie 5', wie an den Blockteilen 5a, b dargestellt gewählt, die ein gegenseitiges Zentrieren der Blockteile beim Zusammenpressen in Querrichtung 11 bewirken.

Ferner können die Kabeldurchlässe 12 direkt auf der Trennlinie 5' angeordnet sein, wie in den Blöcken 5' und 5" dargestellt, oder abseits der Trennlinie jeweils ganz in einem der Blockteile 5a, b, oder es kann beides in einem Dichtungsblock der Fall sein, wie am Block 5"'a, b dargestellt.

Von den geteilten Blöcken wird zumindest der Blockteil 5a, 5'a, 5"a.... auf die Führungsstäbe 14 aufgeschoben, bevor das Plattenteil 2a in die horizontale Lage hochgeklappt wird. Beim Hochklappen werden dann die benötigten bereits geöffneten Kabeldurchlässe 12 in den aufgesteckten Blockteilen 5a, 5'a, ... um die Kabelumfänge herumgelegt.

Anschließend werden die von dem hinteren klappbaren Plattenteil 2a weiter entfernten Blockteile 5b, 5'b, 5"b auf die Führungsstäbe aufgesteckt und gegen die ersten Blockteile 5a, 5'a, 5"a... geschoben und angelegt und dabei ebenfalls mit ihren benötigten bereits geöffneten Kabeldurchlässen 12 um die entsprechenden Kabel herumgelegt.

Anschließend wird das vordere Plattenteil 2b von unten her eingesetzt und an dem Rahmen 7 auf Höhe der Streben 7a fixiert. Damit dies möglich ist, ist dabei die Größe der Öffnung 9 in Querrichtung 11 noch etwas größer als die Breite der Dichtungsblöcke 5. Dadurch ist jedoch noch keine zuverlässige Abdichtung zwischen den Dichtungsblöcken 5 und der Bodenplatte 2 gegeben.

Um dies zu erreichen wird anschließend eine Pressleiste 19, die in Längsrichtung 10 über die gesamte Länge der Öffnung 9 verläuft und im Querschnitt eine gewinkelte Form mit einem vertikalen und einem horizontalen Schenkel besitzt, gegebenenfalls auch einen zweiten horizontalen Schenkel, besitzt, gegen die Vorderkanten der Dichtungsblöcke 5 gepresst.

Dies wird erreicht, indem der vertikale Schenkel der Dichtungsleiste 19 Durchgangsöffnungen für die freien Enden der Führungsstäbe 14 besitzt und auf diesen freien Enden ein nicht dargestelltes Gewinde aufgebracht ist.

Nach Durchschieben der freien Enden durch die Pressleiste 19 werden Gewindeverschlüsse 20, insbesondere Schnellverschlüsse, auf das Gewinde der Führungsstäbe 14 aufgeschraubt und dadurch die Pressleiste 19 gegen die Dichtungsblöcke 5 gepresst.

Gegenüber dem Plattenteil 2b ist die Pressleiste 19 in Querrichtung 11 verschiebbar befestigt, indem von der Plattenebene abragende Zapfen des Plattenteiles 2b in Querrichtung verlaufende Langlöcher der Pressleiste 19 eingreifen.

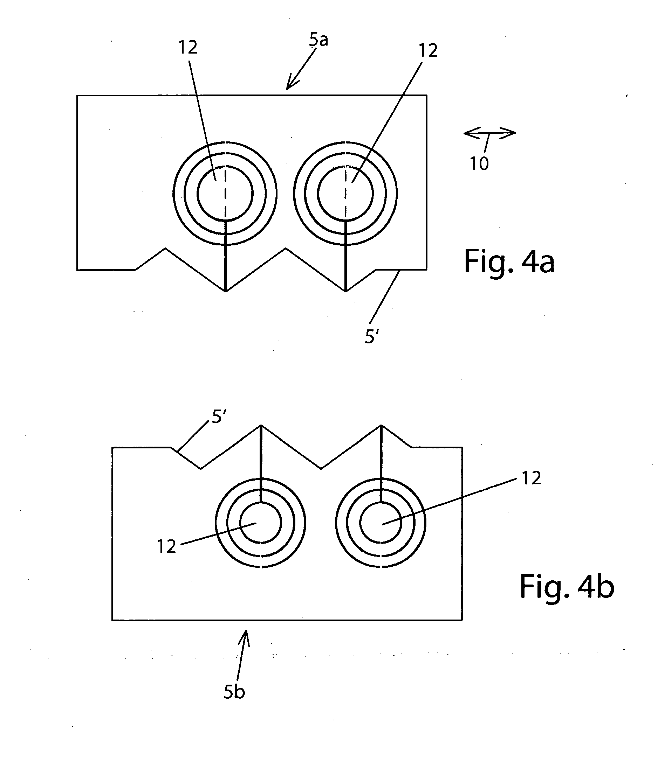

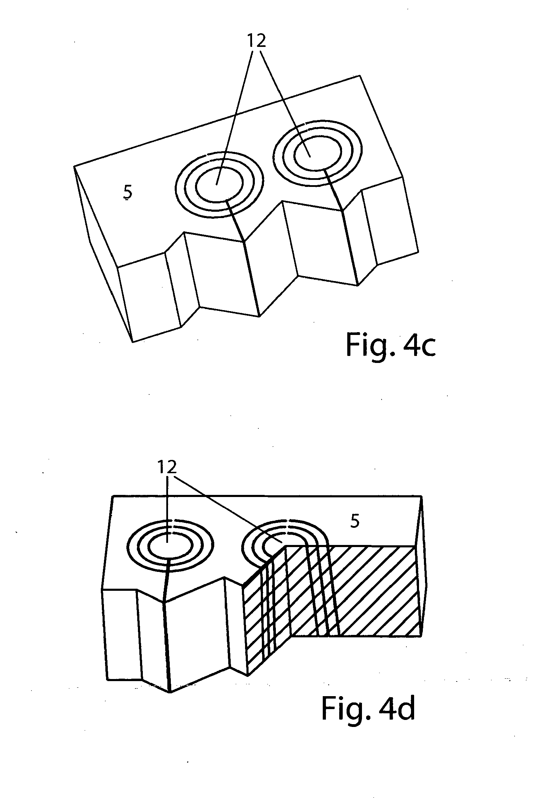

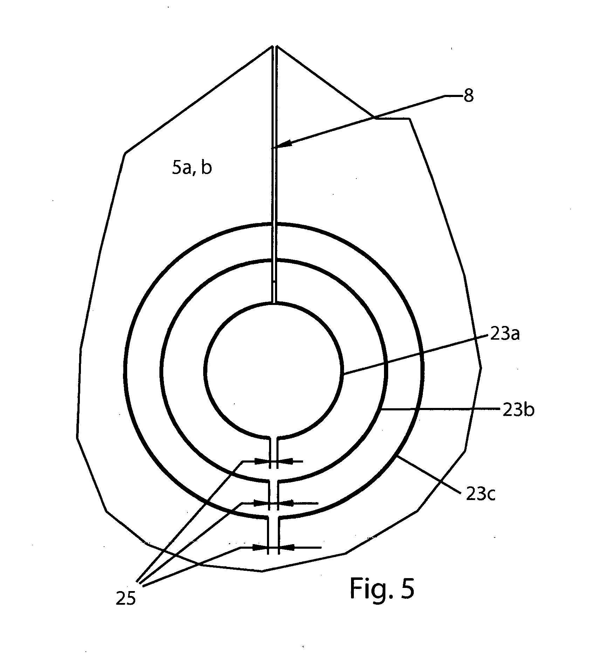

Die Figuren 4 und 5 zeigen einen Dichtungsblock 5 im Detail:
Zunächst zeigt Figur 5, dass die vorgefertigten Kabeldurchlässe 12 aus nicht ganz zu einem Ring geschlossenen Ringschnitten 23a, b, c unterschiedlichen Durchmessers bestehen, die konzentrisch zueinander liegen, so dass je nach Durchmesser des abzudichtenden Kabels das entsprechende Kernteil entnommen werden kann, nachdem der gegenüber dem Dichtungsblock verbliebene Haltesteg 25 manuell durchtrennt wurde.

Um das Kabel einführen zu können, reicht ein Zugangsschnitt 8 von der Außenkante des Dichtungsblockes 5 über die äußeren Ringsschnitte 23b, c hinweg bis zum Innersten Ringschnitt 23a.

Die Haltestege 25 in den einzelnen Ringschnitten sind vorzugsweise auf der vom Zugangsschnitt 8 gegenüberliegenden Seite im Ringschnitt 23a, b, c vorhanden.

Die gute Dichtwirkung kommt unter anderem dadurch zustande, dass die Dichtungsblöcke 5 eine Höhe von mehreren Zentimetern besitzen und damit eine große Dichtungslänge gegenüber dem Kabelaußendurchmesser.

Um dies weiter zu verbessern, erstrecken sich die Ringschnitte 23 sowie der Zugangsschnitt 8 nicht nur über die gesamte Höhe, also Dicke, des Dichtungsblockes 5, wie vor allem in Figur 4b und 4e dargestellt, sondern die kreisförmigen Ringschnitte 23 bilden keine zylindrische Form, sondern eine Kegelform, indem sie gegenüber der vertikalen Mittelachse des Kabeldurchlasses 12 geneigt sind um einen Kegelwinkel von wenigen Grad.

Damit beim Zusammenpressen der Blockteile 5a und b diese nicht gegenseitig in Längsrichtung 10 verrutschen, ist ihre Trennlinie 5' vorzugsweise zickzackförmig gestaltet, wobei der Zugangsschnitt 8 und auch die Mitte der Kabeldurchlässe 12 vorzugsweise auf Höhe jeweils einer Spitze, insbesondere der nach außen weisenden Spitze, eines Blockteiles 5a, b liegen.

Dadurch kann auch erreicht werden, dass die beiden Blockteile 5a, b identisch gestaltet sind, so dass nur eine Sorte von Blockteilen bevorratet werden muss.

**BEZUGSZEICHENLISTE**

| | | | |
|---|---|---|---|
| KVS | Kabelverteilerschrank | 12 | Kabeldurchlass |
| 1 | Schaltschrank | 13 | |
| 2 | Bodenplatte | 14 | Führungsstab |
| 2a,b | Plattenteil | 14' | Durchgangsöff-nung |
| 3 | Sockelbereich | | |
| 4 | Verteilerraum | 15 | Kabel |
| 5 | Kabeldichtungsblock | 16 | Scharnier |
| 5a, b | Blockteil | 17 | Dichtung |
| 5' | Trennlinie | 18 | Anschlagfläche |
| 6 | Gehäuse | 19 | Pressleiste |
| 7 | Rahmen | 20 | Gewindever-schluss |
| 7a | Querstrebe | | |
| 8 | Zugangsschnitt | 21 | Tür |
| 9 | Öffnung | 22 | Sockelverblen-dung |
| 9a | Längskante | | |
| 10 | Längsrichtung der Aufsicht | 23 | Ringschnitt |
| | | 24 | Knebelver-schluss |
| 10' | Trennlinie | | |
| 11 | Querrichtung der Aufsicht | 25 | Haltesteg |

## Patentansprüche

1. Schaltschrank (1), insbesondere Kabelverteilerschrank (KVS), mit
- einer Bodenplatte (2) zwischen Sockelbereich (3) und Verteilerraum (4),
- Kabeldichtungselementen im Mittelbereich der Bodenplatte (2),
- wobei die Bodenplatte (2) aus mehreren Plattenteilen (2a, b) besteht mit einer Trennlinie (10') dazwischen, die parallel zur Längsrichtung (10), der in der Aufsicht auf die Bodenplatte (2) größten Erstreckungsrichtung, verläuft,
- wobei wenigstens ein Plattenteil (2a) der Bodenplatte (2) klappbar um eine Längsachse ist,
**dadurch gekennzeichnet, dass**
das wenigstens eine Plattenteil (2a) klappbar an einem Rahmen (7) des Schaltschrankes (1) befestigbar ist.

2. Schaltschrank (1) nach einem der vorhergehenden Ansprüche,
**dadurch gekennzeichnet, dass**
das klappbare Plattenteil (2a) nach unten wegklappbar ist.

3. Schaltschrank (1) nach einem der vorhergehenden Ansprüche,
**dadurch gekennzeichnet, dass**
das klappbare Plattenteil (2a) vom Rahmen (2) demontierbar und dabei nach unten in den Sockelbereich (3) hinein verlagerbar ist.

4. Schaltschrank (1) nach einem der vorhergehenden Ansprüche,
**dadurch gekennzeichnet, dass**
im Befestigungsbereich des klappbaren Plattenteiles (2a) ein Scharnier (16) zur Befestigung am Rahmen (7) vorhanden ist, welches entweder vom Rahmen (7) demontierbar ist oder das Scharnier (16) trennbar ist.

5. Schaltschrank (1) nach einem der vorhergehenden Ansprüche,
**dadurch gekennzeichnet, dass**
das gegenüber dem klappbaren Plattenteil (2a) andere Plattenteil (2b) vom Rahmen (7) demontierbar und dabei ausschließlich in den Sockelbereich (3) hineinbewegbar ist.

6. Schaltschrank (1) nach einem der vorhergehenden Ansprüche,
**dadurch gekennzeichnet, dass**
von wenigstens einem, inbesondere genau einem, Plattenteil (2a) aus von der Längskante der Öffnung (9) in Richtung der Öffnung (9), also in Querrichtung (11) verlaufend, in der Plattenebene Führungsstäbe (14) vorstehen.

7. Schaltschrank (1) nach Anspruch 6,
**dadurch gekennzeichnet, dass**
die Führungsstäbe (14) über die Trennlinie (10') zwischen den Plattenteilen (2a, b) vorstehen und insbesondere über die gegenüber liegende Längskante (9a) der Öffnung (9) in dem anderen Plattenteil (2b) im montierten Zustand vorstehen.

8. Schaltschrank (1) nach einem der vorhergehenden Ansprüche,
**dadurch gekennzeichnet, dass**
die Kabel-Dichtungselemente Dichtungsblöcke aus elastischem Material, insbesondere Schaumstoff, sind, mit einer Dichtungslänge in der vertikalen Kabelverlaufsrichtung von mehr als 30 mm, besser mehr als 50 mm, besser mehr als 70 mm, in denen Kabeldurchlässe (12a, b) ausgebildet sind.

9. Schaltschrank (1) nach Anspruch 8,
**dadurch gekennzeichnet, dass**
die Dichtungsblöcke (5) in Längsrichtung (10) in je zwei Blockteile (5a, b) zweigeteilt sind, wobei die Trennlinie (5') zwischen den Blockteilen (5a, b) in der Aufsicht betrachtet Vorsprünge in Querrichtung aufweist und insbesondere zickzack-förmig gestaltet ist.

10. Schaltschrank (1) nach einem der vorhergehenden Ansprüche 8 oder 9,
**dadurch gekenntzeichnet, dass**
die Kabeldurchlässe (12) auf der Trennlinie (5'), insbesondere mit ihrer Mitte auf der Trennlinie (5'), liegen und/oder die Kabeldurchlässe (12) vollständig in jeweils einem Blockteil (5a, b), insbesondere in jedem Blockteil (5a, b), angeordnet sind und mit der Trennlinie (5') über einen Zugangsschnitt (8) verbunden sind.

11. Schaltschrank (1) nach einem der vorhergehenden Ansprüche 8-10,
**dadurch gekennzeichnet, dass**
die Kabeldurchlässe (12) als vorgefertigte Ringschnitte (23a, b) im Dichtungsblock (5) vorhanden sind, die nicht vollständig ringförmig geschlossen sind und noch Haltestege (25) zur Unterbrechung des ringförmigen Schnittes vorhanden sind.

12. Schaltschrank (1) nach Anspruch 11,
**dadurch gekennzeichnet, dass**
jeder Kabeldurchlass (12) mehrere konzentrische solcher Ringschnitte (23a, b..) aufweist.

13. Schaltschrank (1) nach einem der vorhergehenden Ansprüche 8-12,
**dadurch gekennzeichnet, dass**
die Dichtungsblöcke (15) neben den Kabeldurchlässen (12) in Querrichtung verlaufende Durchgangsöffnungen (14') aufweisen in einem Abstand entsprechend dem Abstand der Führungsstäbe (14) an den Plattenteilen (2a, b) und mit einem Durchmesser zum Aufnehmen der Führungsstäbe (14).

14. Schaltschrank (1) nach einem der vorhergehenden Ansprüche 8-13,
**dadurch gekennzeichnet, dass**
die Dichtungsblöcke (5) in Querrichtung (11) ein Übermaß gegenüber der Erstreckung der Öffnung (9) in der Bodenplatte (2) aufweisen und/oder die aneinander gereihte Summe der in Längsrichtung in der Öffnung (9) Platz findenden Dichtungsblöcke (5) ein Übermaß gegenüber der Länge der Öffnung (9) in der Bodenplatte (2) besitzt.

15. Schaltschrank (1) nach einem der vorhergehenden Ansprüche,
**dadurch gekennzeichnet, dass**
die Plattenteile (2a, b) wenigstens an ihrer Längskante der Öffnung (9) eine in vertikaler Richtung verlaufende Anschlagfläche (18), wenigstens entsprechend der Höhe der Dichtungsblöcke (5) aufweisen, von denen insbesondere die Führungsstäbe (14) in der Mitte dieser Höhe abstreben.

16. Schaltschrank (1) nach einem der vorhergehenden Ansprüche,
**dadurch gekennzeichnet, dass**
die Längskante (9a) der Öffnung (9) an dem insbesondere nicht klappbaren Plattenteil (2a, b) als in Querrichtung gegenüber dem Plattenteil (2b) verschiebbare Pressleiste (19) ausgebildet ist, die von den freien Enden der Führungsstäbe (14) durchdrungen wird und von auf die freien Enden aufgeschraubten Gewindeverschlüssen (20) gegen die Dichtungsblöcke (5) gepresst wird.

17. Verfahren zum Montieren der zweigeteilten Bodenplatte (2) in einem Schaltschrank, insbesondere Kabelverteilerschrank (KVS), zwischen Sockelbereich (3) und Verteilerraum (4), mittels
- Befestigen des ersten, klappbaren Plattenteiles (2a) an einer horizontalen Querstrebe (7) des Rahmens (7),
- Aufschieben der ersten Blockteile (5a) auf die Führungsstäbe (14) des heruntergeklappten Plattenteiles (2a) über die gesamte Länge der Öffnung (9),
- Hochklappen der herabgeklappten Plattenteile (2a) und dabei Einführen der Kabel (15), die in den bereits auf die Führungsstäbe (14) aufgeschobenen Blockteile (5a) in den entsprechenden Kabeldurchlässen (12) Platz finden sollen,
- Fixieren der hochgeklappten Plattenteile (2a) in der horizontalen, hochgeklappten Lage gegenüber dem Rahmen (7),
- Aufschieben der in Querrichtung (11) zweiten Hälfte des Blockteils (5b) auf die Führungsstäbe (14) über die gesamte Länge der Öffnung (9) und dabei Einführen der Kabel (15) in die Kabeldurchlässe (12) dieser zweiten Blockteile (5b),
- Heranführen des zweiten Plattenteiles (2b), insbesondere des vorderen Plattenteiles (2b), durch den Verteilerraum (4) von unten in die Plattenebene und Fixieren gegenüber dem Rahmen (7),
- Aufschieben der Pressleiste (19) mit den Durchgangsöffnungen auf die Führungsstäbe (14),
- Aufbringen der Gewindeverschlüsse (20) auf die Gewinde am freien Ende der Führungsstäbe (14) und Vorspannen der Dichtungsblöcke (5) in Querrichtung mit Hilfe der Gewindeverschlüsse (20) und der Pressleiste (19).

## Claims

1. An electrical cabinet (1), in particular a cable distribution cabinet (KVS) comprising:
- a base plate (2) between pedestal portion (3) and distribution space (4),
- cable sealing elements in a center portion of the base plate (2),
- wherein the base plate (2) is made from plural plate elements (2a, b) with a separation line (10') there between which extends parallel to the longitudinal direction (10) which is the largest extension of the base plate (2) in a top view,
- wherein at least one plate element (2a) of the base plate (2) is foldable about a longitudinal axis,
**characterized in that**
the at least one plate element (2a) is attachable in a foldable manner at a frame (7) of the electrical cabinet (1).

2. The electrical cabinet (1) according to one of the preceding claims,
**characterized in that**
the foldable plate element (2a) is foldable in a downward direction.

3. The electrical cabinet (1) according to one of the preceding claims,
**characterized in that**
the foldable plate element (2a) is dismountable from the frame (2) and thus moveable downward into the pedestal portion (3).

4. The electrical cabinet (1) according to one of the preceding claims,
**characterized in that**
a hinge (16) for attachment at the frame (7) is provided in an attachment portion of the foldable plate element (2a), wherein the hinge is either dismountable from the frame (7) or the hinge (16) is separable.

5. The electrical cabinet (1) according to one of the preceding claims,
**characterized in that**
the other plate element (2b) besides the foldable plate element (2a) is dismountable from the frame (7) and thus moveable exclusively into the pedestal portion (3).

6. The electrical cabinet (1) according to one of the preceding claims,
**characterized in that**
guide rods (14) protrude in the plate plane from at least one, in particular exactly one plate element (2a) from a longitudinal edge of the opening (9) in a direction of the opening (9), thus in transversal direction (11).

7. The electrical cabinet (1) according to claim 6,
**characterized in that**
the guide rods (14) protrude beyond the separation line (10') between the plate elements (2a, b) and in particular beyond the opposite longitudinal edge (9a) of the opening (9) in the other plate element (2b) in mounted condition.

8. The electrical cabinet (1) according to one of the preceding claims,
**characterized in that**
the cable sealing elements are sealing blocks made from an elastic material, in particular foam rubber with a sealing length in a vertical cable extension orientation of more than 30 mm, advantageously more than 50 mm, particularly advantageously more than 70 mm in which cable pass through openings (12a, b) are configured.

9. The electrical cabinet (1) according to claim 8,
**characterized in that**
the sealing blocks (5) are divided in longitudinal direction (10) in two respective block elements (5a, b), wherein the separation line (5') between the block elements (5a, b) viewed in top view has protrusions in transversal direction that are configured in particular serrated.

10. The electrical cabinet (1) according to one of the preceding claims 8 or 9, **characterized in that**
the cable pass through openings (12) are arranged on the separation line (5'), in particular with their centers on the separation line (5') and/or the cable pass through openings (12) are arranged respectively in a block element (5a, b) in particular in each block element (5a, b) and connected with the separation line (5') through an access cut (8).

11. The electrical cabinet (1) according to one of the preceding claims 8 - 10, **characterized in that**
the cable pass through openings (12) are provided as prefabricated annular cuts (23a, b) in the sealing block (5), wherein the annular cuts are not completely closed in ring shape and still include support bars (25) that interrupt the annular cut.

12. The electrical cabinet (1) according to claim 11,
**characterized in that**
each cable pass through (12) includes plural concentric annular cuts (23a, b).

13. The electrical cabinet (1) according to one of the preceding claims 8 - 12, **characterized in that**
the sealing blocks (15) in addition to the cable pass through openings (12) include transversally extending pass through openings (14') at a distance corresponding to the distance of the guide rods (14) at the plate elements (2a, b) and with a diameter for receiving the guide rods (14).

14. The electrical cabinet (1) according to one of the preceding claims 8 - 13, **characterized in that**
the sealing blocks (5) have an oversize in transversal direction (11) relative to the extension of the opening (9) in the base plate (2) and/or a lined up sum of the sealing blocks (5) that fits in longitudinal direction into the opening (9) has an oversize relative to the length of the opening (9) in the base plate (2).

15. The electrical cabinet (1) according to one of the preceding claims,
**characterized in that**
the plate elements (2a, b) at least at their longitudinal edge of the opening (9) have a vertically extending contact surface (18) at least corresponding to the height of the sealing blocks (5), wherein in particular the guide rods (14) branch off at a middle of this elevation.

16. The electrical cabinet (1) according to one of the preceding claims,
**characterized in that**
the longitudinal edge (9a) of the opening (9) is configured at the in particular non foldable plate element (2a, b) as a press bar (19) that is slideable in a transversal direction relative to the plate element (2b), wherein the press bar is penetrated by the free ends of the guide rods (14) and is pressed against the sealing blocks (5) by threaded closures (20) that are threaded onto the free ends.

17. A method for mounting a two part base plate (2) in an electrical cabinet, in particular a cable distribution cabinet (KVS) between the pedestal portion (3) and the distribution space (4) comprising the steps:
- attaching a first foldable plate element (2a) at a horizontal transversal strut (7a) of the frame (7),
- sliding the first block elements (5a) onto the guide rods (14) of the folded down plate element (2a) over an entire length of the opening (9),
- folding up the folded down plate elements (2a) and thus introducing the cables (15) which shall fit into the block elements (5) already slid onto the guide rods (14) in the respective cable pass through openings (12),
- fixating the folded up plate elements (2a) in the horizontal folded up position relative to the frame (7),
- sliding the second half in transversal direction (11) of the block element (5b) onto the guide rods (14) over the entire length of the opening (9) and thus introducing the cables (15) into the cable pass through openings (12) of the second block element (5b),
- approaching the second plate element (2b), in particular the front plate element (2a,b) through the distribution space (4) from below into the plate plane and fixating relative to the frame (7),
- sliding the press bar (19) with the pass through openings onto the guide rods (14),
- applying the threaded closure (20) onto the threads at the free end of the guide rods (14) and preloading the sealing blocks (5) in transversal direction through the threaded closures (20) and the press bar (19).

## Revendications

1. Armoire de distribution (1), en particulier de distribution de câble (KVS) comportant
- une plaque de base (2) disposée entre un socle (3) et une chambre de distribution (4)
- des éléments d'étanchéité de câble dans la zone centrale de la plaque de base (2
- la plaque de base (2) se composant de plusieurs parties de plaques (2a , b) avec une ligne de séparation (10') entre les deux qui s'étend parallèlement à la direction longitudinale (10) qui s'étend dans la vue de dessus de la plaque de base (2) la direction d'extension la plus grande en vue de dessus (2),
- au moins une partie de plaque (2a) de la plaque de base (2) étant rabattable autour d'un axe longitudinal,
**caractérisée en ce qu'**
au moins une partie de plaque (2a) est fixable de manière rabattable sur un cadre (7) de l'armoire de distribution (1).

2. Armoire de distribution (1) selon l'une des revendications précédentes
**caractérisée en ce que**
la partie de plaque rabattable (2a) peut être rabattue vers le bas.

3. Armoire de distribution (1) selon l'une des revendications précédentes
**caractérisée en ce que**
la partie de plaque rabattable (2a) peut être démontée du cadre (7) et être déplacée vers le bas dans le socle (3).

4. Armoire de distribution (1) selon l'une des revendications précédentes
**caractérisée en ce que**
dans la zone de fixation de la partie de plaque rabattable (2a), il est prévu une charnière (16) pour la fixation sur le cadre qui est soit démontable du cadre (7) ou la charnière (16) est amovible.

5. Armoire de distribution (1) selon l'une des revendications précédentes
**caractérisée en ce que**
l'autre partie de plaque rabattable (2b) par rapport à la partie de plaque rabattable (2a) peut être démontée du cadre (7) et peut être introduite exclusivement dans la zone de socle (3).

6. Armoire de distribution (1) selon l'une des revendications précédentes
**caractérisée en ce que**
depuis au moins une, exactement une partie de plaque (2a), des barres de guidage(14) font saillie du bord longitudinal de l'ouverture (9) en direction de l'ouverture (9), donc dans la direction transversale (11), dans le plan de plaque.

7. Armoire de distribution (1) selon l'une des revendications précédentes
**caractérisée en ce que**
les barres de guidage (14) font saillie au-delà de la ligne de séparation (10') entre les parties de plaque (2a, b) et en particulier au-delà du bord longitudinal opposé (9a) de l'ouverture (9) à l'état monté dans l'autre partie de plaque (2b).

8. Armoire de distribution (1) selon l'une des revendications précédentes
**caractérisée en ce que**
les éléments d'étanchéité de câble sont des blocs d'étanchéité en matière élastique en particulier en mousse cellulaire, avec une longueur de joints dans la direction de passage de câble, de plus de 30 mm de préférence de plus de 50 mm, au mieux de plus de 70 mm dans lesquelles sont ménagés des passages de câble (12a, b).

9. Armoire de distribution selon la revendication 8,
**caractérisée en ce que**
les blocs d'étanchéité (5) sont séparés dans la direction longitudinale (10) en deux parties de blocs (5a, b), la ligne de séparation entre les deux parties de bloc (5a, b), observé en vue de dessus, des saillies dans la direction longitudinale et en particulier présentant une forme en zigzag.

10. Armoire de distribution (1) selon l'une des revendications précédentes 8 ou 9,
**caractérisée en ce que**
les passages de câble (12) se trouve sur la ligne de séparation (5') en particulier avec leur milieu sur la ligne de séparation (5') et/ou en particulier sont disposés entièrement dans respectivement chaque partie de bloc (5a, b) en particulier dans chaque partie de bloc (5a, b) et sont reliés à la ligne de séparation (5') par une coupe d'accès (8).

11. Armoire de distribution (1) selon l'une des revendications précédentes
**caractérisée en ce que**
les passages de câble (12) font partie en tant que sections annulaires préfabriquées (23a, b) du bloc d'étanchéité (5), ne sont pas complétement fermés angulairement et présentent encore des nervures de maintien (25) pour interrompre la découpe annulaire.

12. Armoire de distribution selon la revendication 1,
**caractérisée en ce que**
chaque passage de câble (12) présente plusieurs sections annulaires concentriques (23a, b...).

13. Armoire de distribution (1) selon l'une des revendications précédentes 8 à 12
**caractérisée en ce que**
les blocs d'étanchéité (15) présentent à côté des passages de câble (12) des ouvertures de passage s'étendant transversalement à une distance correspondant à la distance entre les barres de guidage (14) sur les parties de plaque (2a, b) et d'un diamètre permettant le logement des barres de guidage (14).

14. Armoire de distribution (1) selon l'une des revendications précédentes
**caractérisée en ce que**
les blocs d'étanchéité (5) présentent dans la direction transversale (11) un débordement par rapport à l'extension de l'ouverture (9) dans la plaque de base (2) et/ou que la somme alignée des blocs d'étanchéité (5) se trouvant dans l'ouverture (9) présente un débordement par rapport à la longueur de l'ouverture (9) dans la plaque de base (2).

15. Armoire de distribution (1) selon l'une des revendications précédentes
**caractérisée en ce que**
les parties de plaque (2a, b) présentent au moins sur leur bords longitudinal de l'ouverture (9) une surface de butée (18) dans la direction verticale, au moins en fonction de la hauteur des blocs d'étanchéité (5), dont en particulier les barres de guidage (14) font saillie au milieu de cette hauteur.

16. Armoire de distribution (1) selon l'une des revendications précédentes
**caractérisée en ce que**
le bord longitudinal (9a) de l'ouverture (9) est réalisé sur la partie de plaque (2a, b) en tant que baguette de pression (19) coulissante dans la direction transversale par rapport à la partie de plaque (2b), en partie non rabattable ainsi que dans la direction transversale par rapport à la partie de plaque (2b), baguette qui est traversée par les extrémités libres des barres de guidage (14) et est pressée contre les blocs d'étanchéité (5) sur les fermetures filetées vissés aux extrémités libres.

17. Procédé pour le montage de la plaque de base (2) divisée en deux dans une armoire de distribution, en particulier de distribution de câbles (KVS) entre la zone de socle (3) et la chambre de distribution (4),
- fixation de la première partie de plaque rabattable (2a) sur une traverse horizontale (7) du cadre (7),
- insertion des premières parties de bloc (5a) sur les barres de guidage (14) de la partie de plaque (2a) rabattue vers le bas sur l'ensemble de la longueur de l'ouverture (9), et introduction des câbles (15) dans les passages de câble (12) de ces secondes parties de bloc (5b),
- amenée de la seconde partie de plaque (2b), en particulier de la partie avant de plaque (2b), à travers la chambre de distribution (4) par le bas dans le plan de plaque et fixation par rapport au cadre (14),
- application des fermetures filetées (20) sur les filets à l'extrémité libre des barres de guidage (14) et précontrainte des blocs d'étanchéité (5) dans la direction transversale à l'aide des fermetures filetées (20) et de la baguette de pression (19).
